# EUROPEAN PATENT SPECIFICATION

(11) **EP 2 632 614 B1**
(45) Date of publication and mention of the grant of the patent: **02.09.2015**
(21) Application number: 11785823.3
(22) Date of filing: 20.10.2011
(51) Int. Cl.: B08B 17/06, B29C 39/02, B82Y 30/00

(54) **SUPERHYDROPHOBIC FILM CONSTRUCTIONS**
SUPERHYDROPHOBE FILMKONSTRUKTIONEN
STRUCTURES DE FILMS SUPERHYDROPHOBES

(30) Priority: 28.10.2010 US 407806 P
(43) Date of publication of application: 04.09.2013
(73) Proprietor: 3M Innovative Properties Company, Saint Paul, MN 55133-3427 (US)
(72) Inventor: ZHANG, Jun-Ying, Saint Paul Minnesota 55133-3427 (US); SMITH, Terry, L., Saint Paul Minnesota 55133-3427 (US); BROWN, Katherine, A., Saint Paul Minnesota 55133-3427 (US); SCHNOBRICH, Scott, M., Saint Paul Minnesota 55133-3427 (US); CLOUGH, Robert, S., Saint Paul Minnesota 55133-3427 (US)
(74) Representative: Herzog, Fiesser & Partner Patentanwälte PartG mbB
(86) International application number: PCT/US2011/057048
(87) International publication number: WO 2012/058086

(56) References cited:
- MANHUI SUN ET AL: "Artificial Lotus Leaf by Nanocasting", LAGMUIR, vol. 21, 16 August 2005 (2005-08-16), pages 8978-8981, XP002667652,
- XUE-MEI LI ET AL: "What do we need for a superhydrophobic surface? A review on the recent progress in the preparation of superhydrophobic surfaces", CHEMICAL SOCIETY REVIEW, vol. 36, 31 January 2007 (2007-01-31), pages 1350-1368, XP002667653,

## Description

### Field

The present description relates to superhydrophobic films having both microstructured and nanofeatured surfaces. The present description further relates to constructions utilizing such superhydrophobic films, and methods of producing such superhydrophobic films.

### Background

Hydrophobic films and coatings, and more particularly, superhydrophobic films and coatings have garnered considerable attention in recent years due to a number of attractive qualities. Highly hydrophobic surfaces have been recognized in nature, perhaps most prevalently on lotus leaves and also on cicada wings. Because of its hydrophobic properties, the lotus leaf is capable of self-cleaning by the washing away of dust particles and debris as water droplets roll off its surface. This ability to self-clean is desirable in a number of modern-day applications. However, it may be difficult to produce a self-cleaning superhydrophobic film that is capable of extended use in certain environments. The publication "Artificial Lotus Leaf by Nanocasting" (Manhui Sun et al., Langmuir 2005, 21,8978-8981) describes a hydrophobic material whose surface presents micrometer-scaled hills with valleys between the hills textured by intricate nanostructures. The current description provides a superhydrophobic film that is highly durable and weatherable in variable conditions, for example, outdoors, and performs very effectively without serious performance concerns after abrasive exposure, even without a surface coating.

### Summary

In one aspect, the present specification relates to a superhydrophobic film as claimed in claim 1. The superhydrophobic film has a surface that includes a plurality of microstructures. Each microstructure includes a plurality of nanofeatures, where both the microstructures and nanofeatures are made of a material that is a majority silicone polymer by weight. The film has a water contact angle of at least 150 degrees, and a sliding angle of less than 10 degrees.

In another aspect, the description of the present specification relates to a method of producing a superhydrophobic film. The method includes providing a film that is a majority by weight silicone polymer, such as poly(dimethylsiloxane) (PDMS), and has microstructures on its first surface. The method further includes applying a layer of metal oxide nanoparticles directly onto the microstructures. The metal oxide nanoparticles serve as an etch mask as the film is etched, and the etching results in nanofeatures formed on the microstructures on the film.

In a third aspect, the description of the present specification relates to a method of producing a superhydrophobic film. The method includes providing a first film comprising microstructures on a first surface of film. The method further includes applying a uniform layer of metal oxide nanoparticles directly onto the microstructures and etching the film, using the metal oxide nanoparticles as an etch mask. The etching results in nanofeatures formed on the microstructures of the first film. Next, a casting material is deposited onto the first film and a mold is formed with the casting material, where the mold is, at least in part, a negative of the microstructures and nanostructures of the first film. A silicone polymer is applied to the mold and cured to form a second film. The second film, when removed, exhibits a water contact angle of at least 150 degrees and a sliding angle of less than 10 degrees.

In a final aspect, the description of the present specification relates to superhydrophobic film. The superhydrophobic film has a surface that includes a plurality of microstructures. Each microstructure includes a plurality of nanofeatures, where both the microstructures and nanofeatures are made of a material that is an elastomer. The film has a water contact angle of at least 150 degrees, and a sliding angle of less than 10 degrees.

### Brief Description of the Drawings

Fig. 1 is a cross-sectional view of a superhydrophobic film construction.
Figs. 2a-c illustrate various shapes of microstructures according to the present description.
Fig. 3 is a cross-sectional view of a nanofeatured microstructure.
Figs. 4a-d illustrate a process for producing a superhydrophobic film.
Figs. 5a-e illustrate a process for producing a superhydrophobic film.
Figs. 6a-d provide illustrations of water droplets as related to measuring water contact angle, advancing angle, and receding angle.
Fig. 7 is an apparatus for durability testing films.
Figs. 8a-c are different microstructure distributions for a superhydrophobic film.

### Detailed Description

Superhydrophobic films and surfaces are very desirable in a number of applications due to their ability to self-clean. Generally, a film may be considered "superhydrophobic" where the water contact angle is greater than 140 degrees. Superhydrophobic films may further be understood as generally nonwettable, as water beads off of the surface of the film upon contact. A further desirable quality for such films may be low contact angle hysteresis, that is, a small difference between the advancing and receding contact angles of the water droplet. A low contact angle hysteresis, or "sliding angle" allows for water beads to roll off of the surface of a film or other construction more easily. The combination of the ability to bead water that comes into contact with the surface of a structure and further roll the beaded water off of the surface is what makes the surface "self-cleaning."

This ability to self-clean is desirable in a number of modern-day applications. For example, self-cleaning superhydrophobic surfaces may be useful on the sun-facing surfaces of solar (photovoltaic) cells, anti-icing applications, corrosion prevention, anti-condensation applications, wind blades, traffic signals, edge seals, anti-fouling applications, and drag reduction and/or noise reduction for automobiles, aircraft, boats and microfluidic devices, just to name a few. Such films may also have valuable anti-reflection properties. There have therefore been attempts to create superhydrophobic films either by microstructuring a film's surface in a manner resembling that of the lotus leaf, coating the film with a hydrophobic chemical coating, or a combination thereof. Unfortunately, a number of these attempts have resulted in films that are not sufficiently durable in outdoor or other harsh environments. This is especially unfortunate due to the difficult conditions to which such films are exposed in the exemplary applications noted. Those attempts at producing films that are durable in the harsh application environments may not display the highly superhydrophobic properties that are necessary for optimal self-cleaning performance. The present description therefore provides an improvement by offering a superhydrophobic film that is highly durable and weatherable in harsh conditions, for example, long-term use outdoors, and performs very effectively, even without a surface coating.

In addition, an increasing number of applications require a superhydrophobic film construction that is transparent to visible or near-visible light. For example, a superhydrophobic film that is used as a front panel of a solar panel or as a protective film over a camera lens needs to be transparent in order to function effectively. The film described herein offers improvement in transparency compared to other superhydrophobic constructions in the art, along with the benefits of high superhydrophobic performance, and improved durability.

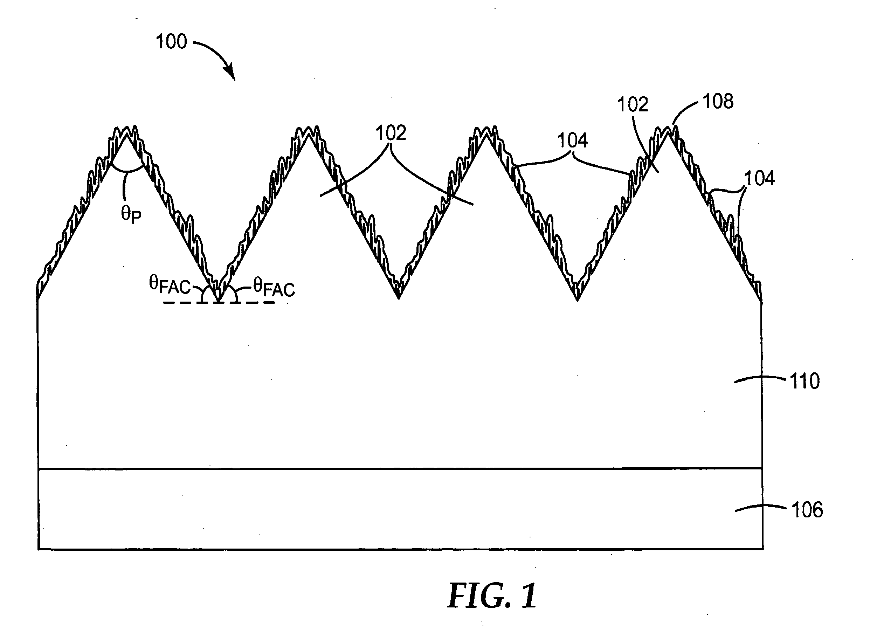

One embodiment of a superhydrophobic film construction according to the present description is illustrated in Fig. 1. Superhydrophobic film construction 100 has a superhydrophobic film 110 with a plurality of microstructures 102. In this specific embodiment, the microstructures 102 are shaped as prisms. Formed on each of the microstructures 102, are a plurality of nanofeatures 104. Generally, in the current description, the microstructures 102 and nanofeatures 104 will be composed of all, or substantially all the same material. More specifically, the microstructures 102 and nanofeatures 104 of superhydrophobic film 100 may both be made of a material that is a majority silicone polymer by weight. In at least some embodiments, the silicone polymer will be poly(dimethylsiloxane) (PDMS), such that both the microstructures and nanofeatures are made of a material that is a majority PDMS by weight. More specifically, the microstructures 102 and nanofeatures 104 may be all or substantially all PDMS. For example, the microstructures and nanofeatures may each be over 95wt.% PDMS.

In some embodiments, other silicone polymers besides PDMS may be useful, for example, silicones in which some of the silicon atoms have other groups that may be aryl, for example phenyl, alkyl, for example ethyl, propyl, butyl or octyl, , fluororalkyl, for example 3,3,3-trifluoropropyl, or arylalkyl, for example 2-phenylpropyl. The silicone polymers may also contain reactive groups, such as vinyl, silicon-hydride (Si-H), silanol (Si-OH), acrylate, methacrylate, epoxy, isocyanate, anhydride, mercapto and chloroalkyl. These silicones may be thermoplastic or they may be cured, for example, by condensation cure, addition cure of vinyl and Si-H groups, or by free-radical cure of pendant acrylate groups. They may also be cross-linked with the use of peroxides. Such curing may be accomplished with the addition of heat or actinic radiation. Other useful polymers include polyurethanes, fluoropolymers including fluoroelastomers, polyacrylates and polymethacrylates. In another embodiment, polymers with a glass transition temperature of at least 25 degrees C are useful. In at least some embodiments, the film may be an elastomer. An elastomer may be understood as a polymer with the property of viscoelasticity (or elasticity) generally having notably low Young's modulus and high yield strain compared with other materials. The term is often used interchangeably with the term rubber, although the latter is preferred when referring to cross-linked polymers.

In some embodiments, the nanofeatures and/or microstructures may also be composed of less than 1% of another material, for example indium tin oxide (ITO). The small amount of ITO on the microstructures 102 and nanofeatures 104 may be a remnant of an etching step used to create the nanofeatures, as discussed further below. Specifically, the small amount of ITO may be either an ITO nanoparticle or remnant of an ITO nanoparticle. The ITO nanoparticles used for etching the nanofeatures may generally have an appropriate diameter desired for surface area coverage during etching. For example, the nanoparticles may have an average diameter of between about 10nm and about 300nm, or more potentially an average diameter of between about 70nm and about 100nm. As further described below, the nanoparticles may be applied as an etch mask as part of a suitable coating suspension. In one embodiment, the liquid mixed with the ITO nanoparticles may be isopropanol.

Two of the most important measurements in determining just how superhydrophobic a film or coating is are that of water contact angle and sliding angle (or contact angle hysteresis). The water contact angle may be measured with a static contact angle measurement device, such as the Video Contact Angle System: DSA100 Drop Shape Analysis System from Kruess GmbH (Hamburg, Germany). In this particular system, a machine is equipped with a digital camera, automatic liquid dispensers, and sample stages allowing a hands-free contact angle measurement via automated placement of a drop of water (where the water drop has a size of approximately 5 µl). The drop shape is captured automatically and then analyzed via Drop Shape Analysis by a computer to determine the static, advancing, and receding water contact angle. Static water contact angle may be generally understood as the general "water contact angle" described and claimed herein.

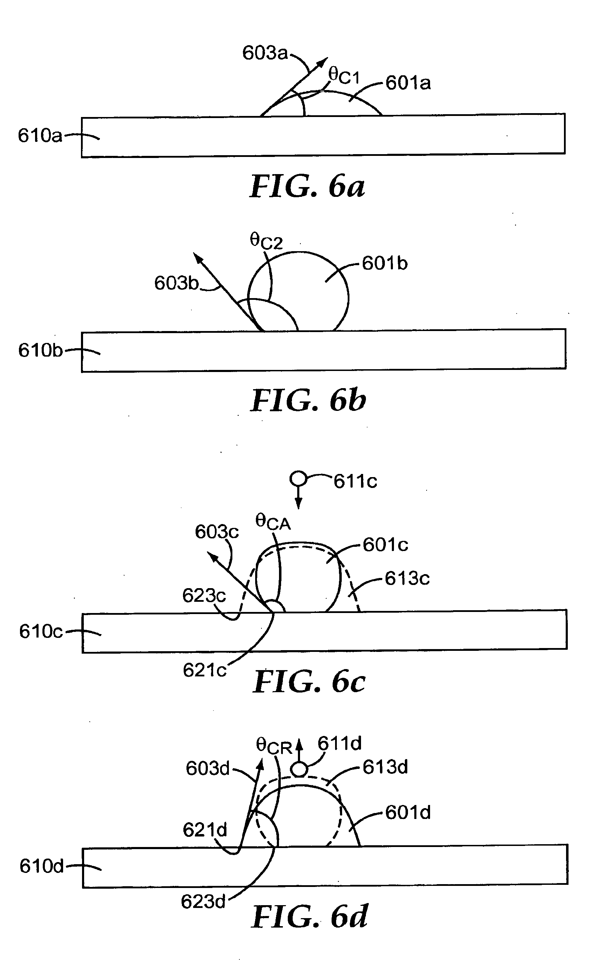

The water contact angle may most simply be understood as the angle at which a liquid meets a solid surface. As shown in Fig. 6a, where a surface of film 610a is not very hydrophobic, the water drop 601a will flatten on the surface. A tangential line 603a may be drawn from interface point of the drop along the edge of the drop. The contact angle θ_{C1} is the angle between this tangent line 603a, and the plane of the drop 601a and film 610a interface. Fig. 6a shows a water droplet that is not beading along the surface and therefore a contact angle θ_{C1} that is well below 90 degrees. Conversely, film 610b in Fig. 6b is hydrophobic. As such, the water droplet 601b experiences more of a beading effect off of the surface. Therefore the tangent line 603b along the drop's edge angles out away from the drop, and a water contact angle θ_{C2} of greater than 90 degrees, and potentially greater than 140 or 150 degrees is achieved.

The "sliding angle" or "contact angle hysteresis" is defined as the difference between the advancing and receding water contact angles. Advancing water contact angle and receding water contact angles relate not just to static conditions, but to dynamic conditions. With reference to Fig. 6c, the advancing water contact angle θ_{CA} is measured by adding further water volume 611c into the drop 601c. As more water is added, the droplet increases in volume and the water contact angle also increases. When a critical volume is reached, the intersection of the droplet surface with the film will jump outward such that droplet 601c will reform into a droplet with shape 613c, and the intersection of the droplet and film surfaces will move from position 621c to position 623c. The water contact angle θ_{CA} is the angle of the drop immediately before the intersection jumps. In the same vein, water receding angle is shown in Fig. 6d. Here the higher volume drop has water 611d slowly removed from it. The surface of initial drop 601 d intersects the film 610d at position 621d. At a given volume, the intersection jumps to position 623c. The tangent line 603d that traces the edge of the drop immediately before this jump defines the receding water contact angle θ_{CR}.

The metal oxide nanoparticle-masking followed by etching of silicone polymer (e.g. PDMS) microstructures results in a microstructured and nanofeatured surface of a common material that exhibits very high levels of hydrophobicity as well as durability. For example, in at least one embodiment, the film of the present description exhibits a water contact angle of at least 150 degrees. The film may further exhibit a sliding angle (or contact angle hysteresis) of less than 10 degrees. In some embodiments the film exhibits a water contact angle of at least 160 degrees, and in other embodiments the film exhibits a water contact angle of at least 170 degrees. Water contact angles of over 175 degrees may be achieved. The sliding angles may be less than 10 degrees, or less than 7.5 degrees or less than 5 degrees. The sliding angle may also be less than 2 degrees or less than 1 degree. In some embodiments, the water contact angle of a film according to the current description may be reduced by no more than 20 degrees, or less than 10 degrees, or less than 5 degrees, or potentially even less than 3 degrees when subjected a severe durability test such as falling sand.

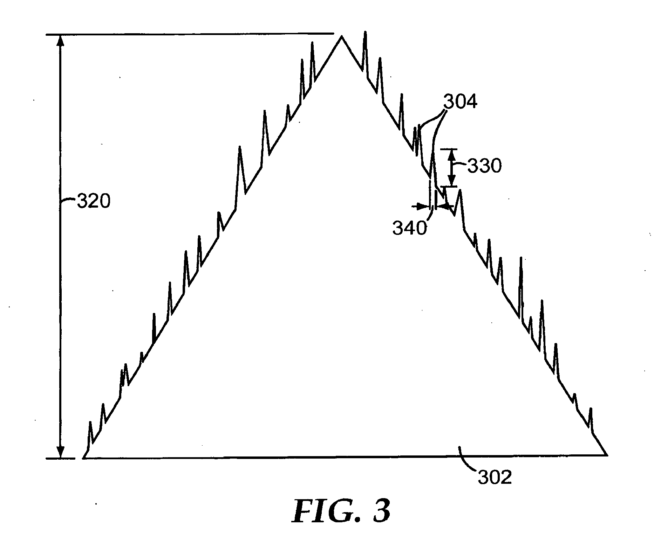

In a number of superhydrophobic film constructions, the superhydrophobicity is caused by an application of a low-surface-energy coating application placed on the surface of a film. Another manner of creating superhydrophobicity on a surface is by creating surface features that may achieve high water contact angles and low sliding angles (or contact angle hysteresis). In order to further enhance hydrophobicity, often even structured films may utilize some sort of low-surface-energy coating. Combining the unique nature of the materials used in both the microstructures and nanofeatures of the present description, as well as the type of etch mask used to complement the properties of these materials, the film of the present description provides a structured surface that may be very superhydrophobic without any need for a low-surface-energy coating. However, it may be beneficial to include a low-surface-energy coating on top of the microstructured and nanofeatured surface of the current film. Therefore, in order to achieve even greater superhydrophobicity, perhaps such that water contact angles approach 180 degrees, a low-surface-energy coating 108 may optionally be applied over microstructures 102 and nanofeatures 104. However, as noted, the material properties and structural make-up of the films contemplated herein allow for great superhydrophobicity absent such a coating. The specific size and shape features of microstructures and nanofeatures according to the present description may be understood by reference to the nanofeatured microstructure of Fig. 3 described further below.

Besides the very high superhydrophobic performance of the currently described films, other useful properties may be exhibited. For example, the microstructured and nanofeatured silicone polymer films described herein may exhibit very low reflectivity and therefore be highly transmissive. This is a highly beneficial property for applications where films are applied to solar cells, or any sort of window or light transmissive usage where the films are used for self-cleaning or anti-icing properties. The films described herein may reflect less than 5% of incident light, and may reflect less than 2% of incident light. In some application, only approximately 1% of light incident on the films is reflected.

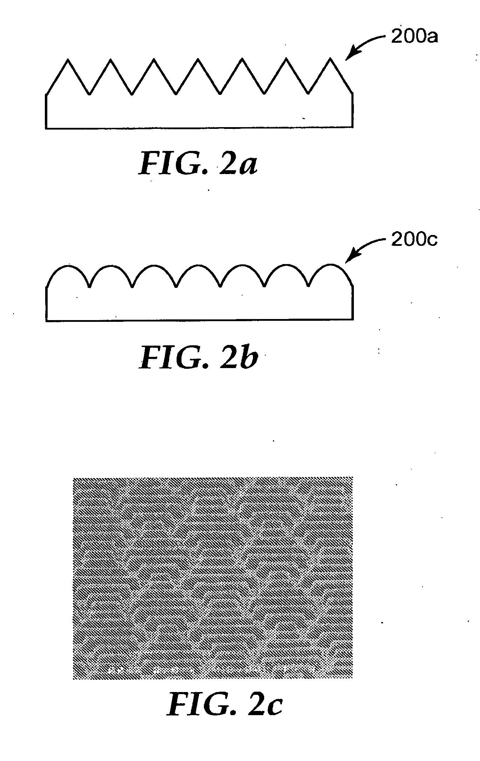

Although Fig. 1 illustrates prism-shaped microstructures 102, a number of different microstructure shapes are contemplated for superhydrophobic film 100. For example, as illustrated in Fig.2a-c, Microstructures may be prism-shaped as illustrated in film 200a, microlenses, as shown on film 200c in Fig. 2b, a pattern that mimics shark skin, as shown on SEM image in Fig. 2c, or any other number of suitable shapes. In each of these microstructures shapes and patterns, nanofeatures are formed into the microstructures to create a superhydrophobic film.

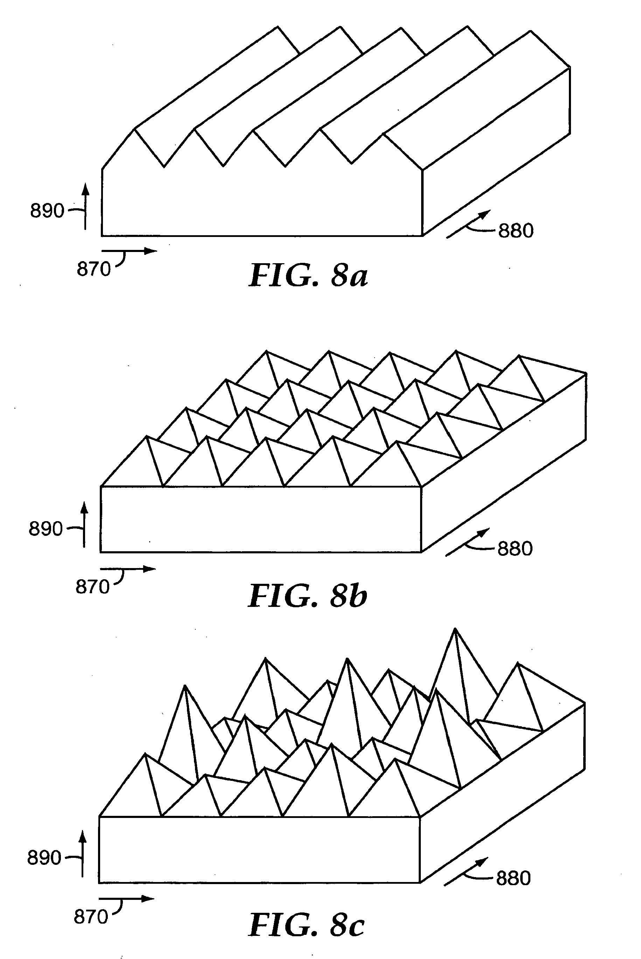

More generally, microstructures may be created that vary in one, two or three dimensions. A better understanding of this may be gained by reference to Figs. 8a-c. For example in Fig. 8a, the microstructures may be structures that identically run the length 880 of the film at the same height along the vertical direction 890 without any segmentation. However, across the width 870 of the film, or across a first dimension, the film is segmented into different discrete microstructures. In addition, as shown in Fig. 8b, the microstructure may vary in two directions. For example, the structures may be segmented as in Fig. 8a along the width 870 of the film, but also be segmented along the length 880 of the film (or second dimension). In such a case, discrete prisms are located along both axes. Here, however, the structures are all the same height in the vertical direction (or third dimension) 890. Finally, as shown in Fig. 8c, the structures may be segmented along both the width and length of the film, but may also vary in the height of the microstructures across the film in the vertical direction 890 (or third dimension). In any of these three scenarios the microstructures may be directly adjacent to one another or may be spaced apart by some portion of film that is flat. The microstructures may contain any combination of linear, curved (such as spherical, hemispherical or parabolic), or other geometries, in any of the three dimensions. For example, they could be a series of round posts protruding from a portion of flat film.

Where the microstructures 102 of the current film are prisms, in one embodiment the prisms may have a peak angle θ_{P} (or angle between the two facets of the prism) of 90 degrees. As the prisms are isosceles triangles, the angle of intersection of the two facets with the plane of the film will then be an angle of 45 degrees. In other embodiments, the peak angle may be greater or less than 90 degrees. For example, the peak angle may be between 90 degrees and 100 degrees, or between 80 degrees and 90 degrees. In one embodiment, the peak angle may be between 70 degrees and 80 degrees. For example, the peak angle may be between about 74 degrees and 76 degrees, perhaps about 74 degrees. In this particular embodiment, the angles of the facets of the pyramid to the plane of the film θ_{FAC} will be 53 degrees. The specific angle chosen for the prism peak angle may allow for a better distribution of nanoparticles on the surface of the microstructures, as will be discussed further below.

Referring back to Fig. 1, in a number of embodiments, superhydrophobic film 110 may be positioned on a substrate 106. The substrate may be made from any number of suitable materials. For example, in some embodiments, substrate 106 may be made from the same materials as microstructures 102 and nanofeatures 104. In such embodiments, the substrate may be a material that is a majority silicone polymer by weight. In one exemplary embodiment, the substrate may be made of PDMS. In other exemplary embodiments, the substrate may be made of polymide or more commonly used substrates. Specifically, glass, metal or plastic substrates may be appropriate, as well as other suitable alternatives such as silicon wafers.

A greater understanding of the structure of the microstructures and nanofeatures of a superhydrophobic film according to the present description may be gained by reference to the microstructure in Fig. 3. Here the microstructure 302 is prism-shaped. However, in other embodiments, the microstructure may be a lens, sharkskin-like structure or any other number of appropriate shapes depending upon the application. Generally, the microstructure 310 may have a height 320 that is between about 0.15 microns and about 1,000 microns. In some embodiments, the microstructure height 320 may be between 1 micron and 500 microns. Adjacent microstructures may be spaced a distance of between about 0.15 microns and about 1000 microns. Microstructures may further have a base width of between about 0.15 microns and about 1,000 microns, or more narrowly between about 1 micron and about 500 microns.

A number of embodiments as illustrated by the figures herein may include microstructures that are directly adjacent to one another, such that the base of a microstructure is directly in contact with the base of an adjacent microstructure. However, it should be understood that the microstructures may be further spaced apart, such that the facets of the microstructures are not in contact and are spaced apart by a segment of film surface that may, for example, be flat. This film surface that lies between the microstructures may also have nanofeatures on its surface. In fact, there may be such space between the microstructures that they have an average peak-to-peak distance of adjacent microstructures up to about 5 times the average height of the microstructures.

The nanofeatures 304 are formed into or onto the microstructure 302 and should cover a great deal of the surface of the microstructure. It should be noted that nanofeatures 304 are not drawn to scale in relation to microstructure 302. Nanofeatures 304 may generally have an average width 340 of between about 5nm to about 250nm. Nanofeatures 304 generally have an average height 330 of between about 10 nm and about 1000nm, and potentially between about 100 nm and about 1000nm As such, nanofeatures 304 may be understood as having high aspect ratios in a number of applications. The nanofeatures exhibit an average aspect ratio of at least about 4 to 1, or at least about 5 to 1, or at least about 6 to 1. In some embodiments, at least some of the nanofeatures may have the high aspect ratios discussed but be much larger in size. For example, the nanofeatures may be of a width that is on the order of one-fifth the width of the microstructure upon which it is positioned.

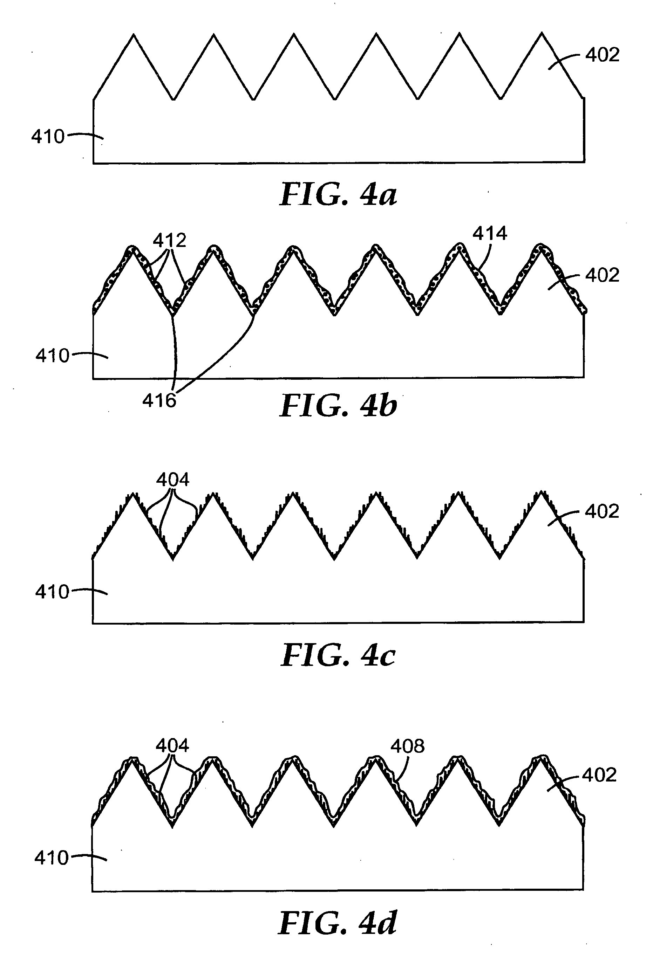

In a different aspect, the present description relates to a method of producing a superhydrophobic film. One particular embodiment of such a method is illustrated in Figs. 4a - d. The first step in the method is providing a film 410, illustrated in Fig. 4a. The film may be made of a majority by weight silicone polymer, and in many embodiments, may be a majority by weight PDMS. The film has a plurality of microstructures 402 on a first surface of the film. In Fig. 4a, the microstructures 402 are illustrated as prisms. However, any number of suitable microstructures 402 and microstructure patterns are contemplated, such as those illustrated in Figs. 2b-c, e.g. microlenses, and sharkskin-like shape/pattern (i.e. patterns that mimic shark skin). In addition, either microprisms, microlenses, or any other shape may be varied in three dimensions as explained with respect to Figs. 8a-c above.

The next step in the method of producing a superhydrophobic film involves applying a layer of metal oxide nanoparticles 412 directly onto the microstructures 402, as shown in Fig. 4b. Application methods may include roll coating, dip coating, and spraying. In at least some embodiments the metal oxide nanoparticles will be indium tin oxide (ITO) nanoparticles. However, other metal oxides are contemplated, such as ZrO₂, CeO₂, Al₂O₃, or TiO₂, just to name a few. The metal oxide nanoparticles may be applied as part of a binder or coating suspension. In one exemplary embodiment, the metal oxide particles 412 are suspended in a coating suspension 414 containing isopropanol. In the coating suspension, the metal oxide particles generally make up between about 0.1% and about 2% of the coating suspension by weight. In a number of embodiments, applying particles to a structured surface in an effective manner is difficult to do, primarily because of the difficulties in achieving uniformity of the particles 412. Specifically, in a film such as film 410 in Fig. 4b, particles 412 may be prone to accumulating in the valleys 416 of the structured surface. In order to combat such effects, it may be useful to adjust coating methods, process conditions, or compositions, or to include a surfactant or dispersant in the coating suspension. However, such uniformity problems may still be present. It is a great advantage of the film and method of the current description that nanoparticles composed of metal oxide, and particularly ITO are capable of coating microstructures 402 in a highly uniform manner, even without applying a great deal of dispersants or surfactants to space the particles in the coating suspension. This effect is all the more important because of the low surface energy of PDMS. This low surface energy generally makes it difficult to coat a PDMS surface with particles with any sort of uniformity. However, due to the nature of the interaction between metal oxide and PDMS, and particularly ITO and PDMS, the metal oxide nanoparticles provide a highly uniform coating along the microstructures. In exemplary embodiments, the ITO nanoparticles have an average diameter of between about 10nm and about 300nm. In at least some embodiments, the indium tin oxide nanoparticles may have an average diameter of between about 70nm and about 100nm, potentially between about 75nm and about 95nm.

The next step after applying the uniform layer of metal oxide nanoparticles to the film is illustrated in Fig. 4c. This step involves etching the film, using the metal oxide nanoparticles 412 from Fig. 4b as an etch mask. The etching step etches away some or all of the metal oxide nanoparticles and etches into the microstructures 402 of the film 410 in those surface areas not covered by etch mask. The result of the etching is a plurality of nanofeatures 404 formed into (or onto, depending on the understanding) the surface of the microstructures 402. A number of known etching techniques may be used for the etching step. Particularly, the etching step may involve any number wet etching techniques, such as acid bathing or placing in a developer. Dry etching techniques such as laser ablation or ion beam milling may also be used. One particularly useful etching method for the etching step is reactive ion etching.

In addition to the beneficial nature of combining metal oxide nanoparticles with a PDMS surface for purposes of distributing or dispersing the particles uniformly over the surface of the microstructures, indium tin oxide nanoparticles exhibit other desirable properties for etching. For example, metal oxide nanoparticles such as indium tin oxide nanoparticles generally etch at a substantially slower rate than the silicone polymer material used for the film (e.g. PDMS). As such, the mask remains in place while etchant moves deep into the microstructured surface. For example, the etched nanofeatures may have a height of between about 10nm to about 1000nm and potentially between about 100nm to about 1000nm. This large etch rate ratio also allows for nanofeatures with high aspect ratios, such as 4 to 1, 5 to 1, 6 to 1 or greater as discussed with respect to the description of the article in Fig. 3. Such aspect ratios for nanofeatures 404 contribute to the superhydrophobic performance that the produced film ultimately achieves. A great number of applications that etch features into the surface of a film, in order to create hydrophobic structures or any other sort of microstructures or nanostructures often utilize silicon dioxide particles as an etch mask. The present description does not contemplate using silicon dioxide particles as an etch mask.

As a final optional step, a low surface energy coating 408 may be applied to the microstructures 402 and nanofeatures 404 of film 410 as shown in Fig. 4d. A low surface energy coating may generally be understood as a coating that, on a flat surface, has a water contact angle of greater than 110 degrees. As discussed, however, such a coating is not necessary to achieve highly superhydrophobic performance. Exemplary low surface energy coating materials that may be used may include materials such as hexafluoropropylene oxide (HFPO), or organosilanes such as, alkylsilane, alkoxysilane, acrylsilanes, polyhedral oligomeric silsequioxane (POSS) and fluorine-containing organosilanes, just to name a few. A number of other suitable low surface energy coatings may also be used to further enhance the superhydrophobicity of the film. Examples of particular coatings known in the art may be found, e.g. in the publication U.S. 2008/0090010 A1, and commonly owned publication, U.S. 2007/0298216. Where a coating is applied to the microstructures and nanofeatures, it may be applied by any appropriate coating method, such as sputtering, vapor deposition, spin coating, dip coating, roll-to-roll coating, or any other number of suitable methods.

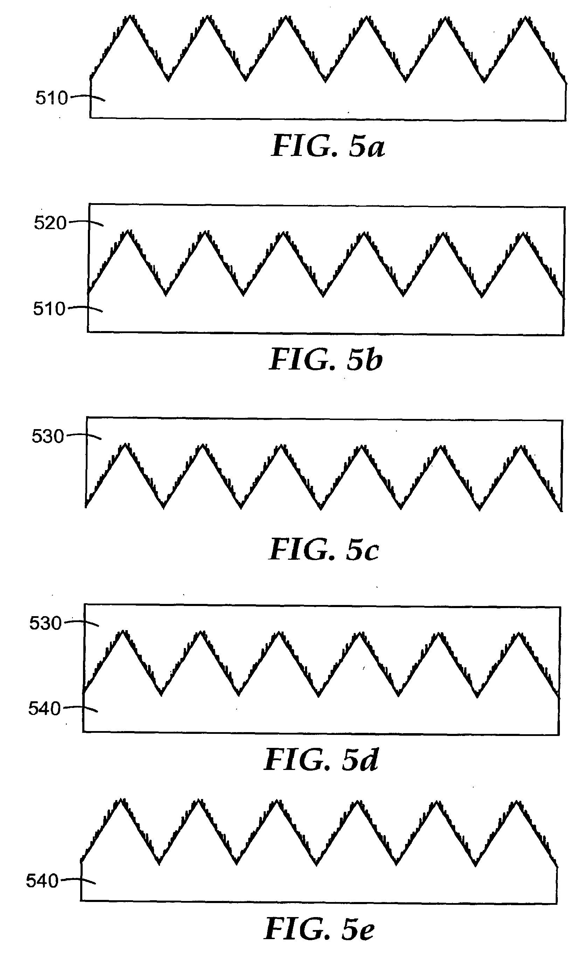

The films of the current description may also be made by some sort of replication method as illustrated in Fig. 5a-e. The current method repeats the steps of Figs. 4a-c. That is, a microstructured silicone polymer film 410 is provided and a uniform layer of metal oxide nanoparticles is applied to the microstructures. The film is then etched, resulting in a film with nanofeatures formed into the microstructures. The film 510 after this step is illustrated in Fig. 5a with microstructures 502 and nanofeatures 504. In the next step of this process, a casting material 520 is deposited onto the first film 510. The resulting casting is then removed and used as a mold 530, illustrated in Fig. 5c. The mold 530 is formed as a negative of the microstructures and nanofeatures of the first film 510. The mold may be made of some sort of polymeric material. In other embodiments, however, the mold will be made of a suitable metal, e.g., nickel. Next, a silicone polymer, such as PDMS, is applied to the mold, and cured into a second film 540, as shown in Fig. 5d. The second film 540 is then removed from mold 530, as in Fig. 5e. The second film 540 may exhibit a water contact angle of at least 150 degrees and a sliding angle of less than 10 degrees. The second film may further exhibit water contact angles of at least 160 degrees or at least 170 degrees, or at least 175 degrees. The second film 540 may also exhibit a sliding angle of equal to or less than 5 degrees.

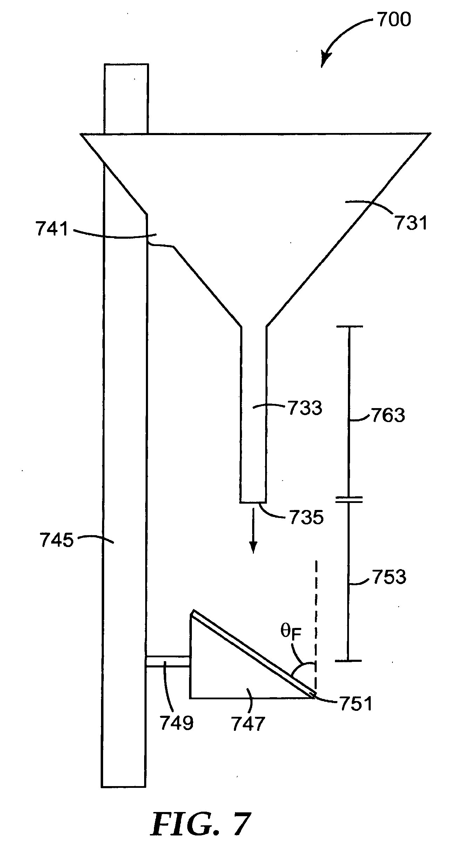

The process described in Figs. 5a-5e may be understood as a production by "replication." It should be understood that in such a process, negative molds and masters may be created for purposes of greater production efficiency. As such the second film 540 may instead also serve as a "master" in order to form negative molds, and ultimately PDMS microstructured and nanofeatured superhydrophobic films. In such a situation, the master may be made of a material capable of shaping to the requisite features. A metal, such as nickel, may be preferred. It should further be understood, also, that a "mold" for purposes of the replication process described herein, may be the primary mold 530, or a secondary mold master, or "daughter mold", which is formed from the primary mold. As noted, a number of superhydrophobic constructions have been created in the art by means of structuring a film surface and/or applying a low surface energy coating to a film's surface. One of the primary improvements of the current film over the art is the durability exhibited by the film. In order to gauge the ability of films to withstand exposure to the elements, it is valuable to expose them to a test condition setting that provides a simulation of the elements. One standard approach for such a simulation is called a falling sand test or falling sand exposure test (as in ASTM standard D 968). The durability of the films according to the present description was tested by dropping a given volume of sand over a predetermined amount of time at a given distance and angle from the surface of the film. Fig. 7 provides a general illustration of the apparatus 700 used to test the films by falling sand. In one exemplary test one kilogram of standardized sand is placed in reservoir 731. Reservoir 731 is connected to a support beam 745 by first connecting means 741. A given amount of sand constantly moves from reservoir 731 into tube 733. It falls within the tube 733 a distance 763 of 90cm. The steady stream of sand then exits tube 733 at tube exit 735 and travels toward film 751. Film 751 is securely positioned beneath the stream of sand by film support structure 747. The film support structure may also be positioned in place by securing to support beam 745 through second connecting means 749. The film support structure 747 positions the film such that the plane of the film is at a 45 degree angle with the primary direction of the stream of sand. Therefore, with reference to Fig. 7, the angle θ_{F} is 45 degrees. The primary contact point on film 751 may be placed a predetermined distance 753 from the tube exit 735 having a diameter of 2cm. In this test, the distance 753 is 25mm.

The "falling sand" test performed as specified above generally will create a great deal of abrasion on the surface of a film, especially a film that is microstructured and/or nanofeatured. As such, it is to be expected that most superhydrophobic film constructions in the art that had to go through the test would see serious degradation to the structures on the film's surface. This would necessarily result in lower hydrophobicity (i.e. lower water contact angles and high sliding angles). It has been discovered in accordance with this description that utilizing a silicone polymer, and in at least some embodiments, specifically utilizing a polymer that contains PDMS, and potentially as much as 95% PDMS, as the material for both the microstructures and nanofeatures on the film allow the films to weather such exposure without suffering drastically in performance

Testing the water contact angle and sliding angle of the superhydrophobic film after the falling sand test is a highly valuable metric of the durability of such a film. The film of the current description may, after exposure to the falling sand test still exhibit a water contact angle of greater than 145 degrees, or 150 degrees, or potentially even 160 degrees. The sliding angle after the falling sand test may be less than 10 degrees or less than 5 degrees.

In order to understand the importance of this performance after exposure to such high levels of abrasion, it is helpful to show the difference in performance between the film of the current description and a hydrophobic film of the prior art after exposure to the falling sand test. One suitable prior art film is described in U.S. Patent Publication No. 2008/0090010 (Zhang et al.). This film has a coating that includes a composition with both microparticles and nanoparticles applied on the microparticles. The comparative film also included microparticles and nanoparticles (though this should not be understood as a claim that the comparative film falls directly within the scope of Zhang et al.'s description). The comparative film includes 4.5 micrometer silicon dioxide microparticles coated with 190 nanometer silicon dioxide nanoparticles. Measurements of a PDMS film according to the current and then the prior art particle film were both taken prior to exposure to the falling sand test. Next, each of the films was exposed to the falling sand test as described above and the water contact angle and roll-off angle measurements were once again taken. The results of the test are provided in Table 1 below.

**Table 1**

| | **Water Contact Angle** | | **Roll-Off Angle** | |
|---|---|---|---|---|
| **Sample** | **Original** | **After Test** | **Original** | **After Test** |
| **PDMS (prisms with nanofeatures)** | 156° | 152° | <1° | <1° |
| **Comparative example (190nm SiO2NP+4.5um SiO2 microparticle)** | 151° | 81° | <1° | >60° |

The "roll-off angle" is a comparable measurement to sliding angle. A tilt angle (the angle of the liquid-solid interfacial line) for a water drop on the above sample was conducted. The sample was placed on the Automated Tilting Base and adjusted for leveling with a bubble level. Then 5uL DI water was delivered using a 10uL syringe (Hamilton). The tilting base was then turned-on manually and off when the water droplet rolls off. The tilt angle was recorded and the tilt base back to 0° for next measurement. As clearly shown in the table, the PDMS film lost very little water contact angle performance (only 4 degrees), and had a roll-off angle that remained below 1 degree after the falling sand test. By comparison, the prior art film had an initially high water contact angle of 151 degrees that was reduced by 70 degrees to 81 degrees after the falling sand test. The roll-off angle of the comparative film drastically increased from less than 1 degree to greater than 60 degrees. The results provide a dramatic illustration of the durability of the film of the present description while maintaining a high and acceptable superhydrophobic performance. By contrast, the film of the prior art is rendered non-hydrophobic by exposure to the test.

Although the superhydrophobic film construction and methods of producing such a film have been described herein with respect to several embodiments, those of skill in the art will recognize that modifications may be made in form and detail without departing from the scope of the claims.

## Claims

1. A superhydrophobic film comprising:
a surface having a plurality of microstructures, wherein each of the microstructures comprises a plurality of nanofeatures formed by etching into one or more surfaces of the microstructures, wherein the plurality of nanofeatures has an average aspect ratio of at least about 4 to 1; and
the microstructures and nanofeatures both comprising a material that is a majority silicone polymer by weight;
wherein the film has a water contact angle of at least 150 degrees and a sliding angle of less than 10 degrees.

2. The superhydrophobic film of claim 1, wherein the film reflects less than 2% of incident light.

3. The superhydrophobic film of claim 1, wherein the microstructures are prisms.

4. The superhydrophobic film of claim 3, wherein the prisms have a peak angle of about 90 degrees.

5. The superhydrophobic film of claim 3, wherein the prisms have a peak angle of between about 74 degrees and about 76 degrees.

6. The superhydrophobic film of claim 1, wherein the microstructures are microlenses.

7. The superhydrophobic film of claim 1, wherein the film has a sliding angle of less than one degree.

8. The superhydrophobic film of claim 1, wherein the film has a water contact angle of at least 160 degrees.

9. The superhydrophobic film of claim 1 wherein the silicone polymer is PDMS.

10. The superhydrophobic film of claim 9, wherein the microstructures and nanofeatures comprise at least 95 wt.% PDMS.

11. The superhydrophobic film of claim 1, wherein the microstructures have an average height of between about 0.15 microns and about 1000 microns.

12. A superhydrophobic article comprising the superhydrophobic film of claim 1, and a substrate upon which the superhydrophobic film is disposed.

13. The superhydrophobic film of claim 1, wherein the film maintains a water contact angle of greater than 145 degrees and a sliding angle of less than 10 degrees after a falling sand exposure test.

14. The superhydrophobic film of claim 1, wherein adjacent microstructures have an average peak-to-peak distance of between about 0 times and about 5 times an average height of the microstructures.

## Patentansprüche

1. Superhydrophobe Folie, die Folgendes umfasst:
eine Oberfläche mit einer Vielzahl von Mikrostrukturen, wobei jede der Mikrostrukturen eine Vielzahl von Nanoeigenschaften umfasst, die durch Ätzen in eine oder mehrere Oberflächen der Mikrostrukturen geformt wurden, wobei die Mehrzahl der Nanoeigenschaften ein allgemeines Seitenverhältnis von mindestens 4 zu 1 aufweist; und
die Mikrostrukturen und Nanoeigenschaften jeweils ein Material beinhalten, das nach Gewicht mehrheitlich ein Silikonpolymer ist;
wobei die Folie einen Wasserkontaktwinkel von mindestens 150 Grad und einen Schiebewinkel von weniger als 10 Grad aufweist.

2. Superhydrophobe Folie gemäß Anspruch 1, wobei die Folie weniger als 2 % des einfallenden Lichts reflektiert.

3. Superhydrophobe Folie gemäß Anspruch 1, wobei die Mikrostrukturen aus Prismen bestehen.

4. Superhydrophobe Folie gemäß Anspruch 3, wobei die Prismen einen Streuwinkel von etwa 90 Grad haben.

5. Superhydrophobe Folie gemäß Anspruch 3, wobei die Prismen einen Streuwinkel zwischen etwa 74 und etwa 76 Grad haben.

6. Superhydrophobe Folie gemäß Anspruch 1, wobei die Mikrostrukturen aus Mikrolinsen bestehen.

7. Superhydrophobe Folie gemäß Anspruch 1, wobei die Folie einen Schiebewinkel von unter einem Grad hat.

8. Superhydrophobe Folie gemäß Anspruch 1, wobei die Folie einen Wasserkontaktwinkel von mindestens 160 Grad hat.

9. Superhydrophobe Folie gemäß Anspruch 1, wobei der Silikonpolymer aus PDMS besteht.

10. Superhydrophobe Folie gemäß Anspruch 9, wobei die Mikrostrukturen und Nanoeigenschaften zu mindestens 95 Gew.-% PDMS enthalten.

11. Superhydrophobe Folie gemäß Anspruch 1, wobei die Mikrostrukturen eine durchschnittliche Höhe zwischen etwa 0,15 Mikrometer und etwa 1000 Mikrometer aufweisen.

12. Superhydrophober Gegenstand, der die superhydrophobe Folie gemäß Anspruch 1 und ein Substrat umfasst, auf dem die superhydrophobe Folie aufgebracht ist.

13. Superhydrophobe Folie gemäß Anspruch 1, wobei die Folie einen Wasserkontaktwinkel von mehr als 145 Grad sowie einen Schiebewinkel von weniger als 10 Grad nach einem Sandrieseltest beibehält.

14. Superhydrophobe Folie gemäß Anspruch 1, wobei angrenzende Mikrostrukturen eine durchschnittliche Spitze-zu-Spitze-Entfernung des etwa 0- bis 5-fachen der durchschnittlichen Höhe der Mikrostrukturen aufweisen.

## Revendications

1. Film superhydrophobe comprenant :
une surface ayant une pluralité de microstructures, où chacune des microstructures comprend une pluralité de nanocaractéristiques formées en gravant une ou plusieurs surface(s) des microstructures, où la pluralité de nanocaractéristiques a un rapport d'aspect moyen d'au moins environ 4 à 1 ; et
les microstructures et nanocaractéristiques les unes et les autres comprenant un matériau qui est un polymère à base majoritaire de silicone ;
où le film a un angle de contact avec l'eau d'au moins 150 degrés et un angle de glissement d'au moins 10 degrés.

2. Film superhydrophobe selon la revendication 1, où le film reflète moins de 2 % de la lumière incidente.

3. Film superhydrophobe selon la revendication 1, dans lequel les microstructures sont des prismes.

4. Film superhydrophobe selon la revendication 3, où les prismes ont un angle de pic d'environ 90 degrés.

5. Film superhydrophobe selon la revendication 3, dans lequel les prismes ont un angle de pic allant d'environ 74 degrés à environ 76 degrés.

6. Film superhydrophobe selon la revendication 1, dans lequel les microstructures sont des microlentilles.

7. Film superhydrophobe selon la revendication 1, où le film a un angle de glissement de moins d'un degré.

8. Film superhydrophobe selon la revendication 1, où le film a un angle de contact avec l'eau d'au moins 160 degrés.

9. Film superhydrophobe selon la revendication 1, dans lequel le polymère à base de silicone est le PDMS.

10. Film superhydrophobe selon la revendication 9, dans lequel les microstructures et les nanocaractéristiques comprennent au moins 95 % en poids de PDMS.

11. Film superhydrophobe selon la revendication 1, dans lequel les microstructures ont une hauteur moyenne allant d'environ 0,15 micromètre à environ 1000 micromètres.

12. Article superhydrophobe comprenant le film superhydrophobe selon la revendication 1, et un substrat sur lequel le film superhydrophobe est disposé.

13. Film superhydrophobe selon la revendication 1, où le film maintient un angle de contact avec l'eau supérieur à 145 degrés et un angle d'inclinaison inférieur à 10 degrés après un test d'exposition à du sable tombant.

14. Film superhydrophobe selon la revendication 1, dans lequel les microstructures attenantes ont une distance de pic à pic comprise entre environ 0 fois et environ 5 fois une hauteur moyenne des microstructures.
